Europäisches Patentamt

European Patent Office

Office européen des brevets

(11) Publication number: **0 288 726 B1**

# EUROPEAN PATENT SPECIFICATION

(45) Date of publication of patent specification: **04.12.91**   (51) Int. Cl.⁵: **B65G 63/02, B65G 67/02**

(21) Application number: **88104311.1**

(22) Date of filing: **18.03.88**

(54) **System for transferring goods from or to a vehicle, comprising automated loading and/or unloading units.**

(30) Priority: **01.04.87 IT 1992787**

(43) Date of publication of application:
**02.11.88 Bulletin 88/44**

(45) Publication of the grant of the patent:
**04.12.91 Bulletin 91/49**

(84) Designated Contracting States:
**AT BE CH DE FR GB LI NL SE**

(56) References cited:
**DE-A- 2 936 160**
**DE-C- 3 436 721**
**US-A- 1 608 213**

(73) Proprietor: **COSTAMASNAGA S.p.A.**
**Via 4 Novembre**
**I-22041 Costamasnaga (Como)(IT)**

(72) Inventor: **Maluta, Sandro**
**Via Enrico Torti 22**
**I-20052 Monza (Milan)(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a system for transferring goods from a first station, such as the factory where the goods are produced, to a vehicle for delivery to their destination.

In loading and unloading vehicles, considerable labour must be used as few mechanical aids specifically for use in stowage operations exist.

This therefore results in a huge economic burden both for an individual industry and for the entire national transportation system, plus a considerable slow-down in the aforesaid operations and sometimes an insufficient check on their proper execution.

The overall result is an increase in the final price of the goods, in their market price, with a consequent decrease in their selling power.

There is therefore a requirement for automated goods transportation.

An object of the present invention is to create the means for developing an automated goods transportation system with particular regard to intermodality, the system being based on automation of the overall flow of goods.

This results in processes which allow complete renewal of goods transportation systems, and extends the well known advantages of intermodality to satysfying a considerable demand which is currently not satisfied by intermodal load-carrying units such as containers, mobile boxes and semitrailers, with obvious effects on the economical development on the country, in particular because of the reduction in costs and transportation times and because of the technical and industrial input, on which the implementation of such systems is based.

These and further objects are attained by a system in accordance with claim 1.

DE-A-2936160 discloses a system for transferring goods from a first station to a vehicle, which system comprises a vertical mobile interface means for temporarily supporting load-carrying containers and comprising means for horizontally transferring the containers and means for transferring the latter between the first station and the interface means. The containers have a particular configuration which includes spaced supporting feet and intimately connected with the goods. The vehicle is not carried by a horizontally translable means and this known system does not provide a recovery of the empty container and the transfer from a first station to a vehicle and viceversa.

The vehicle and load-carrying platforms are of known construction.

The invention will be more apparent from the accompanying drawings, in which:

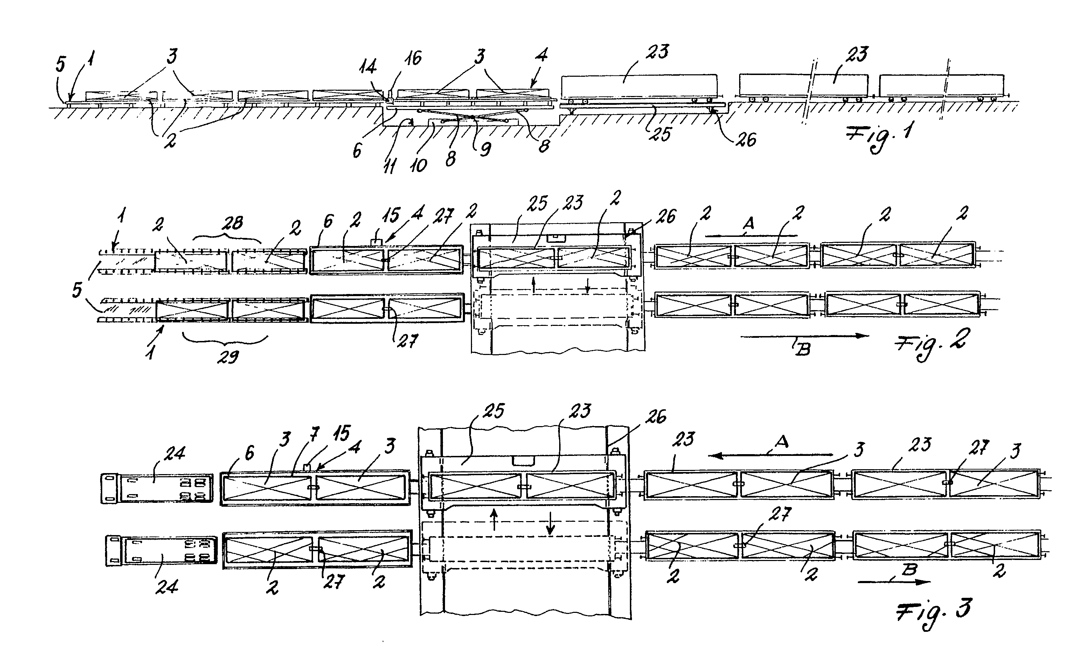

Figure 1 is a side view of the system according to the present invention, and also showing the goods loading means.

Figure 2 is a diagrammatic plan view of the system of Figure 1 in which two unloading and loading lines are provided.

Figure 3 is a diagrammatic plan view of a system according to the invention used in an intermediate stage during the transportation of goods to the user.

Figure 4 is a view of a detail of the system of Figure 1.

Figure 5 is a plan view of the system of Figure 4.

Figures 6A and 6B show in detail an example of the utilisation of certain means of the system of the preceding figures.

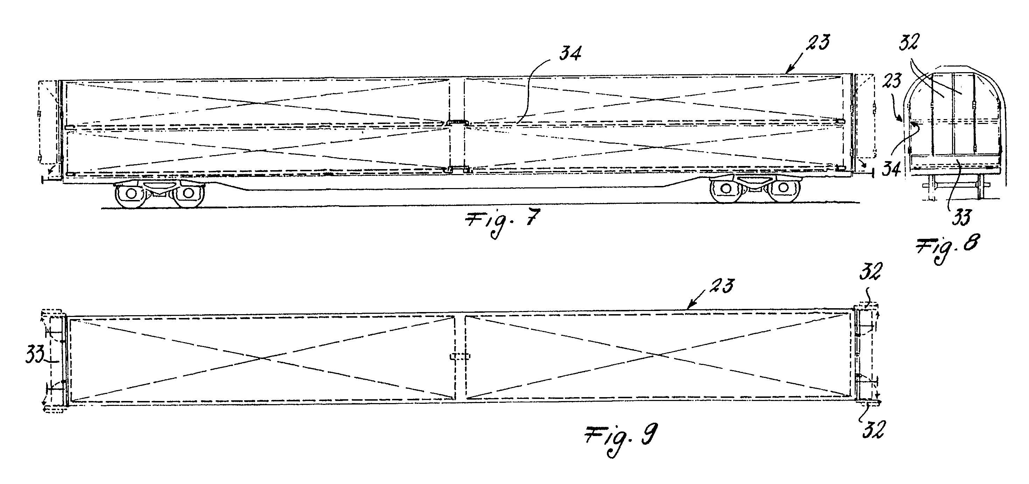

Figure 7 is a side view of a vehicle suitable for goods transportation.

Figure 8 is a front view of Figure 7.

Figure 9 is a plan view of Figure 7.

With reference to the figures, the system shown in the form of an embodiment positioned at the exit of a production line or warehouse defining a first station comprises means 1 for transferring platforms 2 carrying goods 3 to interface means 4 by which the loading and unloading of said load-carrying platforms onto and from said vehicles is automated.

The means 1 for transferring the load-carrying platforms 2 are for example one or more conveyor belts 5 connecting the interface means 4, defining a loading and/or unloading station, to a final point of a production line or warehouse.

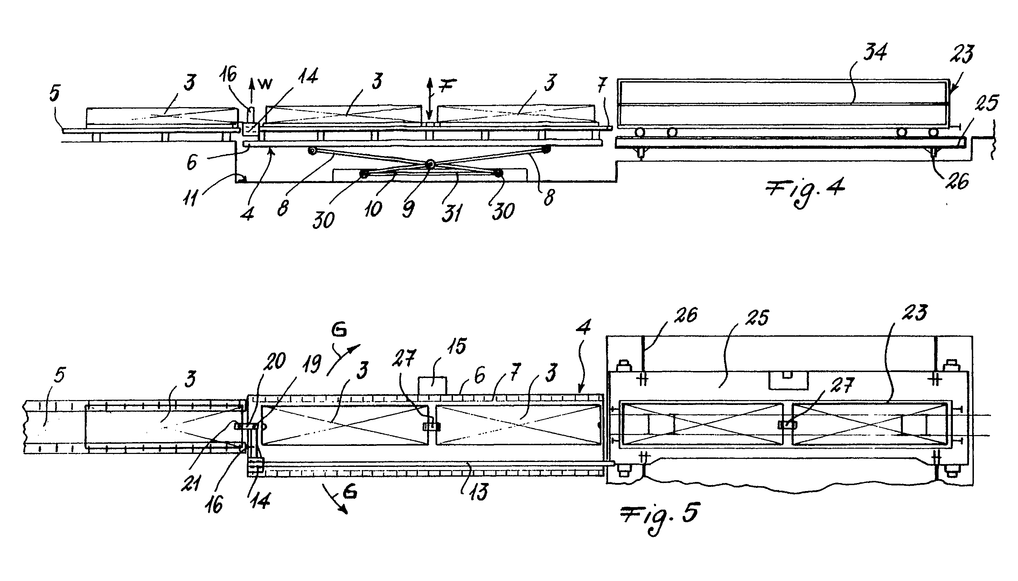

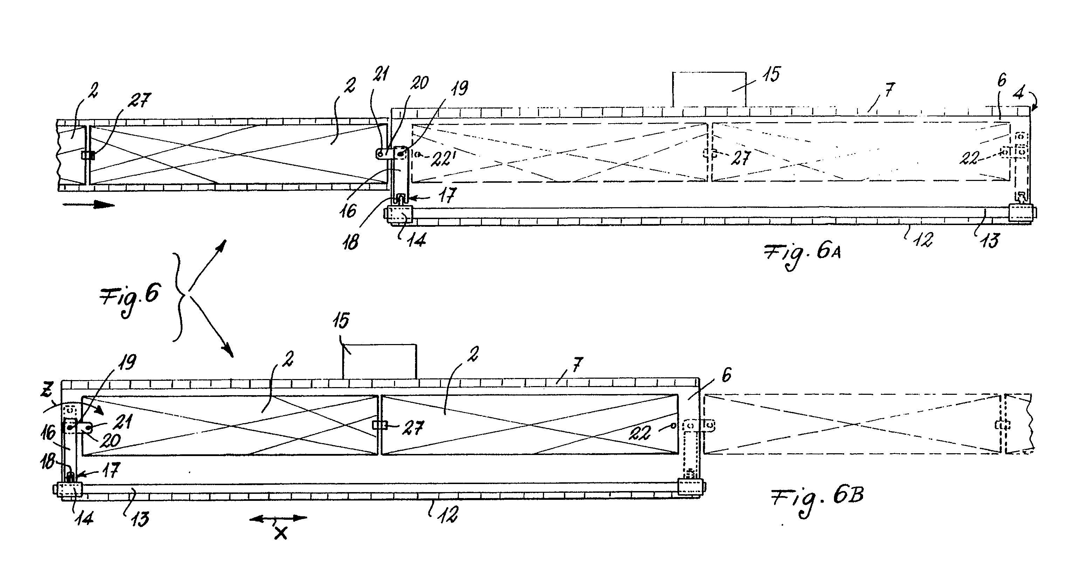

The interface means 4 which automate the loading and unloading comprise a mobile floor 6 which supports convenyor means 7, for example in the form of roller guides, and is supported by elements able to cause it to undergo vertical translational movement (arrow F Figure 4) or rotary movement (arrows G Figure 5). Said elements are represented in the figures by mobile arms 8 hinged together at 9 and secured to a base 10, this base being positioned on a level 11 slightly lower than the level on which the transfer means 1 for the platforms 2 are positioned. The arms 8 have ends 30 slidable in tracks 31 so as to be enable the mobile floor 6 to rise.

On the mobile floor 6 there are provided means for horizontally transferring the load-carrying platforms 2. Specifically, in proximity of and along a longer side 12 thereof there is disposed a guide 13 on which a block 14 can slide (arrow X of Figure 6B), a control cabin 15 being provided on the side opposite to said side 12.

An arm 16, having a forked end 17, is hinged at 18 to the block 14 and can be raised vertically (arrow W Figure 4) by rotating about said hinge 18.

A further arm 20 is hinged at 19 to the arm 16 and supports a pin 21 which coperates with holes 22 provided in the load-carrying platforms 2 so as drag them horizontally and insert them into vehicles which are to transport the goods to their destination.

Said vehicles are in particular railway cars 23 (as shown by way of example in the figures) or articulated trucks 24 (as shown in Figure 3) and comprise end doors 32, 33 to allow the loading and unloading of the platforms which are guided inside the vehicle and rest along their edges on pairs of guides 34 positioned at different heights, which is known as such.

For carrying out the successive operations involved in the unloading and loading, these operations being indicated in Figures 2 and 3 by the letters A and B, there is provided a mobile table 25 which is slidable on guides 26 and supports the vehicle (in the figures a railway car 23) in which the goods 3 are to be carried, the table 25 and guides 26 forming the vehicle translation means.

With regard to the carrying out of the operations and referring in particular to Figures 2, 4 and 6, it will be assumed that goods 3 are to be loaded onto railway cars 23.

The goods 3 are deposited on the platform 2 upstream of the system, for example at the end of a production line, not shown on the figures.

After placing the platform 2 on the conveyor belt 5, it travels as far as the interface means 4. At this point, after raising the mobile arm 16 hinged to the block 14 slidable on the guide 13 located on the mobile floor 6 of the means 4, the pin 21 is correctly positioned over the holes 22 provided at the ends of the platform. Said pin is then inserted into them by lowering the mobile arm 16.

By sliding the block 14 along the guide 13, the platform 2 carrying the goods 3 is made to slide onto the conveyor means 7 provided on the mobile floor 6.

Advantageously, two successive platforms connected together by elements 27 are dragged by the block 14 during its movement. The set of two connected-together platforms will obviously have an overall length equal to the length of the final means of transport into which the goods 3 are to be inserted.

When the platforms 2 have been transferred onto the mobile floor 6, this is raised to the required height, by movement of the mobile arm 8, for insertion into the cars 23.

At this point, the arm 16 rigid with the block 14 slidable on the guide 13 located on the mobile floor 6 is raised so as to disengage the pin 21 from the hole 22. Said block 14 is then slid along the guide 13 so as to cause it to return into proximity with the end of the conveyor belt 5. Finally, the arm 20 supporting the pin 21 is rotated (direction Z of Figure 6B) so as to position this latter over the hole 22' in the second platform present on the mobile floor and closest to the conveyor belt 5. During this operation the arm 16 remains raised, and at the end of it said arm 16 is lowered so as to insert the pin 21 into the hole 22'.

To complete the loading onto the car 23, the block 14 is again slid along the guide 13 towards the car, with the platforms carrying the goods 3 undergoing simultaneous translational movement along the mobile floor 6, so that said platforms become inserted into the car. This latter operation is advantageously falicitated by the presence of guides 34 on the inner walls of the car 23.

Unloading takes place in a like manner to that described but with the operations being carried out in the reserve order.

If however said car 23 is to be firstly unloaded of its platforms 2, which are placed on a first line 28 feeding the first station, and to be then loaded with other platforms 2 carrying goods 3 and lying on a second return line 29, the procedure is illustrated in Figure 2 or 3. In this latter, the two lines of the system do not comprise conveyors 1 of the belt type 5, as the system is used as an intermediate station during the final transportation of the goods to the user. Again in this latter case, a line for loading the empty platforms 2 onto the cars 23 is provided.

Specifically, in Figure 2 the car 23 filled with empty platforms 2 is positioned on a mobile table 25 and, while resting on it, is unloaded by a procedure analogous to that heretofore described.

Afterwards, when unloading is completed, the table is slid on the guides 26 until the car 23 is aligned with the transfer means 1 for the platforms 2.

At this point, as already described, the goods 3 are inserted into the car 23 which, on termination of this operation, is removed from the table and returned to the railway line. After this the table 25 returns to the position which is held during unloading.

## Claims

1. System for transferring goods from a first station, for example defined by the final point of a production line or a warehouse, to a vehicle (23), said system comprising:

   means (1) for transferring goods-loading platforms (2) between the first station and a vertically movable interface means (4) for temporarily supporting the goods-loading platforms (2), said interface means (4) comprising means (7,13,14,16,20,21) for horizontally moving the goods-loading platforms (2) to and from the vehicle (23,24), and translating means (25,26) for carrying and horizontally translating the vehicle (23) perpendicularly to the direction of transfer of the platforms (2) to and from a position aligned with the interface means (4).

2. A system according to claim 1, characterized by first and second interface means (4) and the translating means (25,26) translating from a position aligned with the first interface means to a position aligned with the second interface means and viceversa.

3. A system as claimed in claim 1 or 1 and 2, characterized in that the interface means (4) are rotatable around a vertical axis.

4. A system as claimed in claim 1, characterized in that the means for horizontally moving the goods-loading platforms (2) disposed on the interface means (4) comprise conveyor means (7), and a block (14) slidable in the direction of transfer on a guide (13) and supporting rotatable mobile arms (16,20) of which one (20) supports engagement means (21) arranged to engage with the platform (2).

5. A system as claimed in claim 4, characterized in that the guide (13) on which the block (14) slides is disposed along one of the longer sides (12) in the direction of transfer of a vertically mobile floor (6) of the interface means.

6. A system as claimed in claim 4, characterized in that the engagement means (21) carried by the arm (20) cooperate with holes (22,22') provided in the front and rear ends of the load-carrying platforms (2).

7. A system as claimed in claim 6, characterized in that the holes (22,22') provided in the platforms (2) receive an interconnecting element (27) able to connect two successive platforms together.

## Revendications

1. Système pour transférer des produits d'un premier poste, défini par exemple par le point final d'une chaîne de production ou d'un entrepôt, sur un véhicule (23), ce système comprenant:
un moyen (1) pour transférer les plateformes de chargement des produits (2) entre le premier poste et un moyen d'interface mobile verticalement (4) pour soutenir temporairement les plateformes de chargement des produits (2), ce moyen d'interface (4) comprenant des moyens (7, 13, 14, 16, 20, 21) pour déplacer horizontalement les plateformes de chargement des produits (2) vers et à partir du véhicule (23, 24) et des moyens de translation (25, 26) pour transporter et déplacer horizontalement en translation le véhicule (23), perpendiculairement au sens de transfert des plateformes (2) vers et à partir d'une position alignée sur le moyen d'interface (4).

2. Un système conforme à la revendication 1, caractérisé par un premier et un second moyens d'interface (4) et les moyens de translation (25, 26) déplaçant en translation d'une position alignée au premier moyen d'interface à une position alignée au second moyen d'interface et vice versa.

3. Un système suivant revendication 1 ou 1 et 2, caractérisé en ce que les moyens d'interface (4) peuvent tourner autour d'un axe vertical.

4. Un système suivant revendication 1, caractérisé en ce que les moyens pour déplacer horizontalement les plateformes de chargement des produits (2) disposées sur les moyens d'interface (4) comprennent un transporteur (7), et un bloc (14) coulissant dans le sens du transfert sur un guide (13) et des bras mobiles rotatifs de support (16,20) dont l'un (20) supporte le moyen d'engagement (21) conçu pour entrer en prise avec la plateforme (2).

5. Un système suivant revendication 4, caractérisé en ce que le guide (13) sur lequel le bloc (14) glisse est disposé le long de l'un des côtés plus longs (12) dans le sens du transfert d'un plancher mobile verticalement (6) des moyens d'interface.

6. Un système suivant revendication 4, caractérisé en ce que le moyen d'engagement (21) porté par le bras (20) coopère avec les trous (22, 22') prévus dans les extrémités avant et arrière des plateformes de transport de charge (2).

7. Un système suivant revendication 6, caractérisé en ce que les trous (22, 22') prévus dans les plateformes (2) reçoivent un élément d'interconnexion (27) pouvant raccorder deux plateformes successives.

## Patentansprüche

1. System zum Umladen von Gütern von einer ersten Station, beispielsweise dem Endpunkt einer Produktionslinie oder einem Lager, zu einem Fahrzeug (23), welches umfaßt:
eine Vorrichtung (1) für den Transport von Güterladeplattformen (2) zwischen der ersten Station und einer vertikal bewegbaren Zwischenstelleneinrichtung (4) zur zeitweiligen Unterstützung der Güterladeplattformen (2), wobei die Zwischenstelleneinrichtung Vorrichtungen ( 7, 13, 14, 16, 20, 21) zur horizontalen Bewegung der Güterladeplattform (4) zu dem und von dem Fahrzeug (23, 24) und eine Versetzeinrichtung (25, 26) zum Verschieben des Fahrzeugs (23) senkrecht zur Transportrichtung der Plattformen (2) zu und von einer Position, die mit der Zwischenstelleneinrichtung (4) ausgerichtet ist, aufweist.

2. System nach Anspruch 1, **gekennzeichnet** durch erste und zweite Zwischenstelleneinrichtungen (4) und die Versetzvorrichtung (25, 26), die von einer Position, die auf die erste Zwischentelleneinrichtung ausgerichtet ist, auf eine Position übersetzt, die auf die zweite Zwischenstelleneinrichtung ausgerichtet ist und umgekehrt.

3. System nach Anspruch 1 oder 1 und 2, **dadurch gekennzeichnet,** daß die Zwischenstelleneinrichtung um eine vertikale Achse drehbar ist.

4. System nach Anspruch 1, **dadurch gekennzeichnet,** daß die Vorrichtung zur horizontalen Bewegung der Güterladeplattformen (2) die auf der Zwischenstelleneinrichtung (4) liegend eine Transportvorrichtung (7) und einen Block (14) aufweist, der in Transportrichtung auf einer Führung (13) verschiebbar ist und drehbare, bewegliche Stützarme (16, 20) aufweist, von denen einer (20) eine Eingreifvorrichtung (21) unterstützt, die so angelegt sind, daß sie mit der Plattform (2) in Eingriff treten.

5. System nach Anspruch 4, **dadurch gekennzeichnet,** daß sich die Führung (13), auf der sich der Block (14) verschiebt, entlang einer der längeren Seiten (12) in Transportrichtung eines vertikal bewegbaren Bodens (6) der Zwischenstelleneinrichtung befindet.

6. System nach Anspruch 4, **dadurch gekennzeichnet,** daß die Eingreifvorrichtung (21), die von dem Arm (20) getragen wird, mit Löchern (22, 22') zusammenwirkt, die sich an den Vorder- und Rückenden der Güterladeplattformen (2) befinden.

7. System nach Anspruch 6, **dadurch gekennzeichnet,** daß die Löcher (22, 22') in den Plattformen (2) ein Verbindungselement (27) aufnehmen, welches in der Lage ist, zwei aufeinanderfolgende Plattformen miteinander zu verbinden.

Fig. 1

Fig. 2

Fig. 3

EP 0 288 726 B1

*Fig. 4*

*Fig. 5*

EP 0 288 726 B1

Fig. 6A

Fig. 6

Fig. 6B

EP 0 288 726 B1

Fig. 7

Fig. 8

Fig. 9